# EUROPÄISCHE PATENTSCHRIFT

(11) **EP 0 586 988 B1**
(45) Veröffentlichungstag und Bekanntmachung des Hinweises auf die Patenterteilung: **19.03.1997**
(21) Anmeldenummer: 93113732.7
(22) Anmeldetag: 27.08.1993
(51) Int. Cl.: C08L 59/00, C08K 5/34

(54) **UV-stabilisierte Polyoxymethylenformmassen**
UV-light stabilized polyoxymethylene molding compositions
Masses à mouler à base de polyoxyméthylène, stabilisées contre le rayonnement UV

(30) Priorität: 05.09.1992 DE 4229760
(43) Veröffentlichungstag der Anmeldung: 16.03.1994
(73) Patentinhaber: BASF Aktiengesellschaft, 67063 Ludwigshafen (DE)
(72) Erfinder: Kielhorn-Bayer, Sabine, Dr., D-6701 Maxdorf (DE); Zeiner, Hartmut, Dr., D-6700 Ludwigshafen (DE); Goerrissen, Heiner, Dr., D-6700 Ludwigshafen (DE); Saenger, Dietrich, Dr., D-6710 Frankenthal (DE)

(56) Entgegenhaltungen:
- EP-A- 0 000 769
- EP-A- 0 351 235
- EP-A- 0 356 167
- EP-A- 0 412 840
- EP-A- 0 421 723
- EP-A- 0 477 770
- DE-A- 4 007 766
- DATABASE CHEMABS CHEMICAL ABSTRACTS SERVICE, COLUMBUS, OHIO, US 104:150125 5. Mai 1986, & JP-A-60 195 155 (ASAHI CHEMICAL IND. COMP.) 3. Oktober 1985

## Beschreibung

### Die Erfindung betrifft

Thermoplastische Formmassen, enthaltend
A) 40 bis 99,69 Gew.-% eines Polyoxymethylenhomo- oder Copolymerisates,
B) 0,1 bis 2 Gew.-% mindestens eines Stabilisators aus der Gruppe der Benzotriazolderivate oder Benzophenonderivate oder aromatischen Benzoatderivate,
C) 0,1 bis 2 Gew.-% mindestens einer sterisch gehinderten Aminverbindung,
D) 0,005 bis 2 Gew.-% eines Polyamids,
E) 0,1 bis 2 Gew.-% einer Epoxygruppen enthaltenden Verbindung,
F) 0 bis 50 Gew.-% eines schlagzäh modifizierenden Polymeren,
G) 0 bis 50 Gew.-% eines faser- oder teilchenförmigen Füllstoffes oder deren Mischungen.

Darüber hinaus betrifft die Erfindung die Verwendung derartiger Formmassen zur Herstellung von Formkörpern jeglicher Art und die so erhaltenen Formkörper.

Polyoxymethylenhomo- und/oder Copolymerisate sind seit langem bekannt. Die Polymerisate zeichnen sich durch eine Anzahl ausgezeichneter Eigenschaften aus, so daß sie für die unterschiedlichsten technischen Anwendungen geeignet sind. Insbesondere im Kfz-Bereich besteht Bedarf für UV-stabilisierte Polyoxymethylene, wobei die Anforderungen insbesondere bei Außenteilen sehr hoch sind.

Folglich hat es nicht an Versuchen gefehlt, Mittel zur Verbesserung der UV-Stabilität zu finden.

Nach der Lehre der EP-A 368 635 zeichnen sich POM-Formmassen, welche ein sterisch gehindertes Phenol mit Triazinfunktionalität enthalten, durch eine verbesserte UV-Stabilität aus.

Stabilisatorkombinationen aus hochmolekularen Polyalkylpiperidinen für Thermoplaste werden in der EP-A 252 877 beschrieben.

Sterisch gehinderte Amine auf Oxopiperazyl-triazinbasis werden gemäß der EP-A 448 037 zur UV-Stabilisierung von POM eingesetzt.

Aus der EP-A 171 941 sowie JP-A 60/195 155 und 63/193 950 sind Kombinationen aus sterisch gehinderten Aminen und Benzotriazolverbindungen für POM bekannt.

Wärmestabilisatoren, insbesondere Polyamide, sind u.a. aus der EP-A 446 737 und US-A 3 960 989 bekannt.

Aus der JP-A 49/99 739 ist für gefärbte, verstärkte POM-Formmassen Ethylendiglycidylether als Wärmestabilisator bekannt.

Trotz dieser Maßnahmen besitzen bekannte Polyoxymethylenformmassen jedoch für einige Anwendungen eine nicht ausreichende UV-Stabilität, die zu einer unzureichenden Lebensdauer der Formkörper führt.

Aufgabe der vorliegenden Erfindung bestand daher darin, die UV-Stabilität von Polyoxymethylenformmassen zu verbessern und somit die Vergilbungsneigung zu minimieren.

Diese Aufgabe wurde durch die eingangs definierten thermoplastischen Polyoxymethylenformmassen gemäß Anspruch 1 gelöst.

Bevorzugte Massen dieser Art sind den Unteransprüchen zu entnehmen.

Als Komponente A) enthalten die erfindungsgemäßen Formmassen 40 bis 99,69, vorzugsweise 60 bis 99,3 Gew.-% und insbesondere 70 bis 98,7 Gew.-% eines Polyoxymethylenhomo- oder Copolymerisats.

Derartige Polymerisate sind dem Fachmann an sich bekannt und in der Literatur beschrieben.

Ganz allgemein weisen diese Polymere mindestens 50 mol-% an wiederkehrenden Einheiten -CH₂O- in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere als Komponente A) bevorzugt, insbesondere solche, die neben den wiederkehrenden Einheiten -CH₂O- noch bis zu 50, vorzugsweise 0,1 bis 20 und insbesondere 0,3 bis 10 mol-% an wiederkehrenden Einheiten 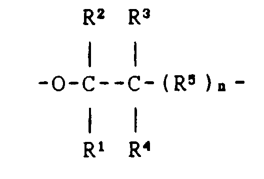 wobei R¹ bis R⁴ unabhängig voneinander ein Wasserstoffatom, eine C₁- C₄-Alkylgruppe oder eine halogensubstituierte Alkylgruppe mit 1 bis 4 C-Atomen und R⁵ eine -CH₂-, -CH₂O-, eine C₁- bis C₄-Alkyl- oder C₁- bis C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 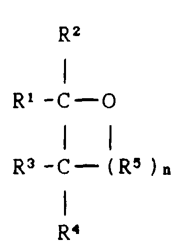 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie linare Oligo- oder Polyformale wie Polydioxolan oder Polydioxepan als Comonomere genannt.

Als Komponente A) ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise einer bifunktionellen Verbindung der Formel 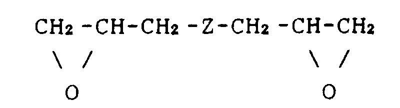 wobei Z eine chemische Bindung, -O-, -ORO- (R = C₁- bis C₈-Alkylen oder C₂- bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylencopolymere haben Schmelzpunkte von mindestens 150°C und Molekulargewichte (Gewichtsmittelwert) M_{w} im Bereich von 5.000 bis 200.000, vorzugsweise von 7.000 bis 150.000.

Endgruppenstabilisierte Polyoxymethylenpolymerisate, die an den Kettenenden C-C-Bindungen aufweisen, werden besonders bevorzugt.

Die erfindungsgemäßen Formmassen enthalten als Kompo nente B) 0,1 bis 2, vorzugsweise 0,2 bis 1,5 und insbesondere 0,2 bis 1 Gew.-% mindestens eines Stabilisators aus der Gruppe der Benzotriazolderivate oder Benzophenonderivate oder aromatische Benzoatderivate.

Geeignete Benzotriazolderivate sind:
2-(2-Hydroxy-5-methylphenyl)-benzotriazol,
2-(2-Hydroxy-3,5-di-t-butylphenyl)-benzotriazol,
2-(3,5-Di-t-amyl-hydroxyphenyl)-benzotriazol,
2-(2'-Hydroxy-3',5'-diisoamylphenyl)-benzotrialzol,
2-[2'-Hydroxy-3',5'-bis(1,1-dimethyl-benzyl)phenyl]-benzotriazol,
2-(2'-Hydroxy-4-octoxyphenyl)-benzotriazol,
2-(2H-Benzotriazol-2-yl)-4-(1,1,3,3-tetramethylbutyl)-phenol,
2-(2H-Benzotriazol-2-yl)-2,4-(tert-butyl)-phenol, 2-(2H-Benzotriazol-2-yl)-4-(1,1-dimethylethyl)-6-(1-methylpropyl)-phenol und
2-(2H-Benzotriazol-2-yl)-4,6-bis(1,1-dimethylpropyl)-phenol.

Derartige Verbindungen sind unter der Bezeichnung Tinuvin ® (eingetragenes Warenzeichen der Firma Ciba Geigy AG) im Handel erhältlich.

Bevorzugte Benzophenonderivate sind:
2,4-Dihydroxybenzophenon,
2-Hydroxy-4-methoxybenzophenon,
2-Hydroxy-4-octoxybenzophenon,
2-Hydroxy-4-dodecyloxybenzophenon,
2,2-Dihydroxy-4-methoxybenzophenon,
2,2-Dihydroxy-4,4-dimethoxybenzophenon,
2-Hydroxy-4-methoxy-5-sulphobenzophenon und
2-Hydroxy-4-oxybenzylbenzophenon.

Als aromatische Benzoatderivate seien beispielhaft p-t-Butylphenylsalicylat und p-Octylphenylsalicylat genannt.

Als Komponente C) enthalten die erfindungsgemäßen Formmassen 0,1 bis 2, vorzugsweise 0,2 bis 1,5 und insbesondere 0,2 bis 1 Gew.-% mindestens einer sterisch gehinderten Aminverbindung. Vorzugsweise kommen Verbindungen der Formel I 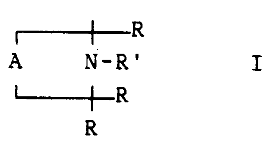 in Betracht,
wobei
R gleiche oder verschiedene Alkylreste,
R' Wasserstoff oder einen Alkylrest und
A eine gegebenenfalls substituierte 2- oder 3-gliedrige Alkylenkette
bedeutet.

Bevorzugte Komponente C) sind Derivate des 2,2,6,6-Tetramethylpiperidins wie:
4-Acetoxy-2,2,6,6-tetramethylpiperidin,
4-Stearoyloxy-2,2,6,6-tetramethylpiperidin,
4-Acryloyloxy-2,2,6,6-tetramethylpiperidin,
4-Methoxy-2,2,6,6-tetramethylpiperidin,
4-Benzoyloxy-2,2,6,6-tetramethylpiperidin,
4-Cyclohexyloxy-2,2,6,6-tetramethylpiperidin,
4-Phenoxy-2,2,6,6tetramethylpiperidin,
4-Benzyloxy-2,2,6,6-tetramethylpiperidin und
4-(phenylcarbamoyloxy)-2,2,6,6-tetramethylpiperidin.

Ferner sind
Bis(2,2,6,6-tetramethyl-4-piperidyl)oxalat,
Bis(2,2,6,6-tetramethyl-4-piperidyl)malonat,
Bis(2,2,6,6-tetramethyl-4-piperidyl)adipat,
Bis(2,2,6,6-tetramethyl-4-piperidyl)sebacat,
Bis(1,2,2,6,6-pentamethylpiperidyl)sebacat,
Bis(2,2,6,6-tetramethyl-4-piperidyl)terephthalat,
1,2-bis(2,2,6,6-tetramethyl-4-piperidyloxy)ethan,
Bis(2,2,6,6-tetramethyl-4-piperidyl)hexamethylen-1,6-dicarbamat,
Bis(1-methyl-2,2,6,6-tetramethyl-4-piperidyl)adipat und
tris(2,2,6,6-tetramethyl-4-piperidyl)benzen-1,3,5-tricarboxylat
geeignet.

Darüber hinaus sind höhermolekulare Piperidinderivate wie das Dimethylsuccinatpolykondensat mit 4-Hydroxy-2,2,6,6-tetramethyl-1-piperidinethanol oder Poly 6-(1,1,3,3-tetramethylbutyl)amino-1,3,5-triazin-2,4-diyl(2,2,6,6-tetramethyl-4-piperidinyl)imino-1,6-hexandiyl(2,2,6,6-tetramethyl-14-piperidinyl)imino geeignet.

Derartige Verbindungen sind unter der Bezeichnung Tinuvin ® oder Chimasorb ® (eingetragenes Warenzeichen der Firma Ciba Geigy AG) im Handel erhältlich.

Die als Komponenten D) verwendbaren Polyamide sind an sich bekannt. Halbkristalline oder amorphe Harze, wie sie z.B. in der Encyclopedia of Polymer Science and Engineering, Vol. 11, S. 315 bis 489, John Wiley & Sons, Inc. 1988, beschrieben werden, können eingesetzt werden, wobei der Schmelzpunkt des Polyamids vorzugsweise unter 225°C, vorzugsweise unter 215°C liegt.

Beispiele hierfür sind Polyhexamethylenazelainsäureamid, Polyhexamethylensebacinsäureamid, Polyhexamethylendodekandisäureamid, Poly-ll-aminoundekansäureamid und Bis-(p-aminocyclohexyl)-methan-dodekansäurediamid oder die durch Ringöffnung von Lactamen, z.B. oder Polylaurinlactam erhaltenen Produkte. Auch Polyamide auf der Basis von Terephthal- oder Isophthalsäure als Säurekomponente und/oder Trimethylhexamethylendiamin oder Bis-(p-aminocyclohexyl)-propan als Diaminkomponente sowie Polyamidgrundharze, die durch Copolymerisation zweier oder mehrerer der vorgenannten Polymeren oder deren Komponenten hergestellt worden sind, sind geeignet.

Als besonders geeignete Polyamide seien Mischpolyamide auf der Grundlage von Caprolactam, Hexamethylendiamin, p,p'-Diaminodicyclohexylmethan und Adipinsäure genannt. Ein Beispiel hierfür ist das unter der Bezeichnung Ultramid ® 1 C von der BASF Aktiengesellschaft vertriebene Produkt.

Weitere geeignete Polyamide werden von der Fa. Du Pont unter der Bezeichnung Elvamide ® vertrieben.

Die Herstellung diese Polyamide wird ebenfalls in der vorgenannten Schrift beschrieben. Das Verhältnis von endständigen Aminogruppen zu endständigen Säuregruppen kann durch Variation des Molverhältnisses der Ausgangsverbindungen gesteuert werden.

Der Anteil des Polyamids in der erfindungsgemäßen Formmasse beträgt 0,005 bis 2 Gew.-%, bevorzugt 0,01 bis 1 Gew.-% und insbesondere 0,02 bis 0,9 Gew.-%.

Als Komponente E)enthalten die erfindungsgemäßen Formmassen 0,1 bis 2, vorzugsweise 0,2 bis 1,5 und insbesondere 0,2 bis 1 Gew.-% einer Epoxygruppen enthaltenden Verbindung.

Unter Epoxygruppen enthaltenden Verbindungen sollen erfindungsgemäß monomere und oligomere (Poly)kondensationsprodukte aus halogenierten Epoxiden, vorzugsweise Epichlorhydrin mit aromatischen, aliphatischen oder cycloaliphatischen Alkoholen oder Carbonsäuren mit bis zu 30 C-Atomen, bevorzugt bis zu 20 C-Atomen, oder Cyanursäure.

Bevorzugte Verbindungen sind Epoxidharze (Polykondensationsprodukte) aus 2.2-Di-(4-hydroxyphenyl)propan (Bisphenol A) und Epichlorhydrin: 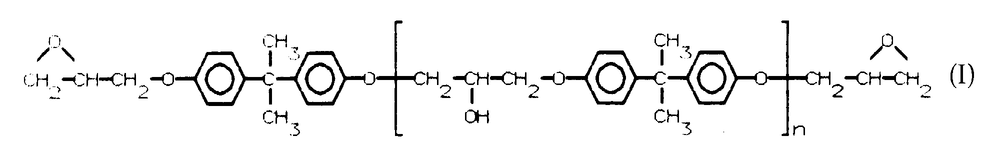 wobei n=O bis 25 bedeutet.

Derartige Produkte sind unter der Bezeichnung Phenoxy ® (eingetragenes Warenzeichen der Union Carbide Corporation) bzw. Epikote ® (Fa. Shell) im Handel erhältlich.

Weitere bevorzugte Verbindungen sind Glycidylether aus Kresol und Epichlorhydrin, Glycidylether aus aliphatischen Alkoholen mit bis zu 14 C-Atomen und Epichlorhydrin, Epoxidharze auf Basis von 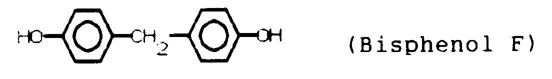 oder 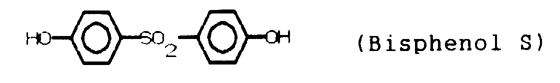 mit Epichlorhydrin, wobei das Molekulargewicht der Polykondensate in weiten Grenzen variieren kann; prinzipiell sind die im Handel erhältlichen Typen sämtlich geeignet.

Darüber hinaus sind epoxydiertes Sojabohnenöl und Glycidylester wie 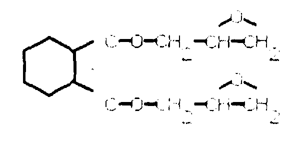 geeignet wobei Triglycidylisocyanurat besonders bevorzugt ist: 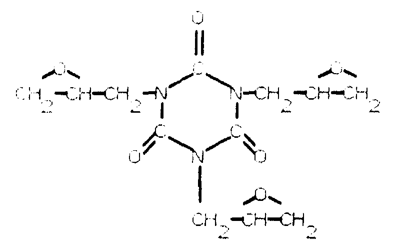 Bevorzugt weisen die als Komponente E) enthaltenen Verbindungen eine Epoxidzahl von 0,1 bis 15, bevorzugt 0,3 bis 11 Äquivalente/kg auf, welche allgemein gemäß DIN 16 945 (Verfahren A oder B) bestimmt wird.

Als Komponente F) enthalten die erfindungsgemäßen thermoplastischen Formmassen 0 bis 50, vorzugsweise 0 bis 40 Gew.-% eines schlagzäh modifizierenden Polymeren (im folgenden auch als kautschukelastisches Polymerisat oder Elastomer bezeichnet).

Bevorzugte Arten von solchen Elastomeren sind die sog. Ethylen-Propylen-(EPM)- bzw. Ethylen-Propylen-Dien-(EPDM)-Katuschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadien, Cyclooctadien und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien-5-Ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

Die EPDM-Kautschuke können auch mit weiteren Monomeren gepfropft sein, z.B. mit Glycidyl(meth)acrylaten, (Meth)acrylsäureestern und (Meth)acrylamiden.

Eine weitere Gruppe bevorzugter Kautschuke sind Copolymere des Ethylens mit Estern von (Meth)acrylsäure. Zusätzlich können die Kautschuke noch Epoxy-Gruppen enthaltende Monomere enthalten. Diese Epoxygruppen enthaltenden Monomere werden vorzugsweise durch Zugabe von Epoxygruppen enthaltenden Monomeren der allgemeinen Formel I oder II zum Monomerengemisch in den Kautschuk eingebaut. 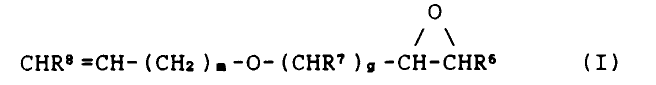 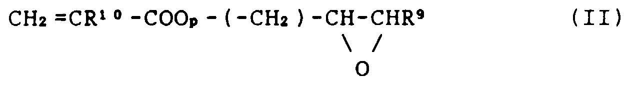 wobei R⁶ - R¹⁰ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R⁶ bis R⁸ Wasserstoff, wobei m für 0 oder 1 und g für 1 steht. Die entsprechenden Verbindungen sind Allylglycidylether und Vinylglycidylether.

Bevorzugte Verbindungen der Formel II sind Epoxygruppen-enthaltende Ester der Acrylsäure und/oder Methwie Glycidylacrylat und Glycidylmethacrylat.

Vorteilhaft bestehen die Copolymeren aus 50 bis 98 Gew.-% Ethylen, 0 bis 20 Gew.-% Epoxygruppen enthaltenden Monomeren sowie der restlichen Menge an (Meth)acrylsäureestern.

Besonders bevorzugt sind Copolymerisate aus
- 50 bis 98,: insbesondere 55 bis 95 Gew.-% Ethylen, insbesondere 0,3 bis 20 Gew.-% Glycidylacrylat und/oder
- 0 bis 40,: insbesondere 0,1 bis 20 Gew.-% Glycidylmethacrylat, und
- 1 bis 50,: insbesondere 10 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder die mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Amino- oder Amidgruppen sowie funktionelle Gruppen, die durch Mitverwendung von Monomeren der allgemeinen Formel 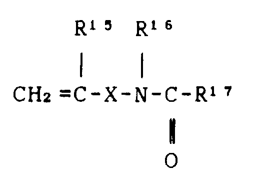 eingeführt werden können,
wobei die Substituenten folgende Bedeutung haben können:
- R¹⁵: Wasserstoff oder eine C₁- bis C₄-Alkylgruppe,
- R¹⁶: Wasserstoff, eine C₁- bis C₈-Alkylgruppe oder eine Arylgruppe, insbesondere Phenyl,
- R¹⁷: Wasserstoff, eine C₁- bis C₁₀-Alkyl-, eine C₆- bis C₁₂-Arylgruppe oder -OR¹⁸
- R¹⁸: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder 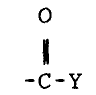
- Y: O-Z- oder NH-Z und
- Z: eine C₁- bis C₁₀-Alkylen- oder C₆- bis C₁₂-Arylengruppe.

Auch die in der EP-A 208 187 beschriebenen Pfropfcomonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat,(N,N-Dimethylamino)methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier spielsweise auf die US-PS 4 148 846 verwiesen.

Im allgemeinen beträgt der Anteil dieser vernetzenden Monomeren an der Komponente F) bis zu 5 Gew.-%, vorzugsweise nicht mehr als 3 Gew.-%, bezogen auf F).

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Monomere für den Kern | Monomere für die Hülle |
|---|---|
| Buta-1,3-dien, Isopren, n-Butylacrylat, Ethylhexylacrylat oder deren Mischungen, ggf. zusammen mit vernetzenden Monomeren | Styrol, Acrylnitril, (Meth)acrylate, gegebenenfalls mit reaktiven Gruppen wie hierin beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Die beschriebenen Elastomere F) können auch nach anderen üblichen Verfahren, z.B. durch Suspensionspolymerisation, hergestellt werden.

Weitere bevorzugte Kautschuke sind Polyurethane, wie in den EP-A 115846, EP-A 11847, EP-A 116456, EP-A 117 664 und der EP-A 327 384 beschrieben. Kommerziell im Handel sind solche Produkte z.B. unter den Bezeichnungen Desmopan ® (Bayer AG) oder Elastollan ® (Elastogran Polyurethane GmbH) erhältlich.

Selbstverständlich können auch Mischungen der vorstehend aufgeführten Kautschuktypen eingesetzt werden.

Als Komponente G) können die erfindungsgemäßen Formmassen 0 bis 50, vorzugsweise 5 bis 40 Gew.-% eines faser- oder teilchenförmigen Füllstoffs oder deren Mischungen enthalten.

Als verstärkend wirkende Füllstoffe seien beispielsweise Kaliumtitanat-Whisker, Kohlenstoff- und vorzugsweise Glasfasern genannt, wobei die Glasfasern z.B. in Form von Glasgeweben, -matten, -vliesen und/oder Glasseidenrovings oder geschnittener Glasseide aus alkaliarmen E-Glas mit einem Durchmesser von 5 bis 200 µm, vorzugsweise 8 bis 50 µm eingesetzt werden können, wobei die faserförmigen Füllstoffe nach ihrer Einarbeitung vorzugsweise eine mittlere Länge von 0,05 bis 1 mm, insbesondere 0,1 bis 0,5 mm aufweisen.

Andere geeignete Füllstoffe sind beispielsweise Wollastonit, Calciumcarbonat, Glaskugeln, Quarzmehl, Si- und Bornitrid oder Mischungen dieser Füllstoffe.

Neben den Komponenten A), B), C) und D) sowie ggf. E), F) und G) können die erfindungsgemäßen Formmassen noch übliche Zusatzstoffe und Verarbeitungshilfsmittel enthalten. Nur beispielhaft seien hier Zusätze zum Abfangen von Formaldehyd (Formaldehyd-Scavenger), Weichmacher, Schmiermittel, Antioxidantien, Haftvermittler, Lichtstabilisatoren und Pigmente genannt. Der Anteil solcher Zusätze liegt im allgemeinen im Bereich von 0,001 bis 5 Gew.-%.

Als Nukleierungsmittel können die erfindungsgemäßen Formmassen gemäß einer bevorzugten Ausführungsform ein Malein-Formaldehyd-Kondensat enthalten. Geeignete Produkte werden z.B. in der DE 25 40 207 beschrieben.

Entsprechende Verbindungen sind dem Fachmann bekannt und beispielsweise in der EP-A 327 384 beschrieben.

Die Herstellung der erfindungsgemäßen thermoplastischen Formmassen erfolgt durch Mischen der Komponenten in an sich bekannter Weise, weshalb sich hier detaillierte Angaben erübrigen. Vorteilhaft erfolgt die Mischung der Komponenten auf einem Extruder.

Die erfindungsgemäßen thermoplastischen Formmassen zeichnen sich durch ein ausgewogenes Eigenschaftsspektrum, insbesondere eine sehr gute UV-Stabilität und eine helle Eigenfarbe aus. Demzufolge eignen sie sich besonders zur Herstellung von Fasern, Folien und Formkörpern jeglicher Art.

### Beispiele

### Es wurden folgende Komponenten eingesetzt:

### Komponente A):

Polyoxymethylencopolymerisat aus 97,3 Gew.-% Trioxan und 2,7 Gew.-% Butandiolformal. Das Produkt enthielt noch ungeführ 3 Gew.-% nicht umgesetztes Trioxan und 5 Gew.-% thermisch instabile Anteile. Nach Abbau der thermisch instabilen Anteile hatte das Copolymer einen Schmelzindex von 9 g/10 min (190°C, 2,16 H nach ISO 1133).

### Komponente B):

1. Tinuvin ® 234 der Firma Ciba Geigy AG 2-(2'-Hydroxy-3',5'-di(1,1-Dimethylbenzyl)phenyl)benzotriazol
2. Tinuvin ® 329 der Firma Ciba Geigy AG 2-(2H-Benzotriazol-2-yl)-4-(1,1,3,3-tetramethylbutyl)phenol
3. Tinuvin ® 320 der Firma Ciba Geigy AG 2-(2H-Benzotriazol-2-yl)-2,4-(tert.butyl)phenol

### Komponente C):

1. Tinuvin ® 622 LD der Firma Ciba Geigy AG Dimethylsuccinatpolymer mit 4-Hydroxy-2,2,6,6-tetramethyl-1-piperidinethanol
2. Tinuvin ® 770 DF der Firma Ciba Geigy AG Bis(2,2,6,6-tetramethyl-4-piperidyl)sebazat
3. Chimasorb ® 944 LD der Firma Ciba Geigy AG Poly 6- (1,1,3,3-tetramethylbutyl)amino -1,3,5-triazin-2,4-diyl (2,2,6,6-tetramethyl-4-piperidinyl)imino -1,6-hexandiyl (2,2,6,6-tetramethyl-14-piperidinyl)imino

### Komponente D):

1. Polyamid mit einem M_{w} von 5.000, hergestellt aus 37 Gew.-% ε-Caprolactam, 63 Gew.-% einer äquimolaren Mischung aus Adipinsäure und Hexamethylendiamin unter Verwendung von Propionsäure als Regler (PA "mono-capped").
2. Ein Mischpolyamid auf der Basis von
   - 29,2 Gew.-%: Caprolactam
   - 34,5 Gew.-%: einer äquimolaren Mischung aus Hexamethylendiamin und Adipinsäure
   - 36,3 Gew.-%: einer äquimolaren Mischung aus p,p'-Diaminodicyclohexylmethan und Adipinsäure
   mit einer Viskositätszahl von 120 ml/g, gemessen in 0,5 gew.-%igen Lösung in konz. Schwefelsäure bei 25°C nach DIN 53 727 (Ultramid ® 1C der BASF AG).
3. Polyamid-Oligomeres mit einem Molekulargewicht von etwa 3.000, hergestellt aus Caprolactam, Hexamethylendiamin, Adipinsäure und Essigsäure (als Molekulargewichtsregler) nach Bsp. 5-4 der US-A 3 960 984 ("PA-dicapped").

### Komponente E):

Araldit ® PT 810 der Firma Ciba Geigy AG: 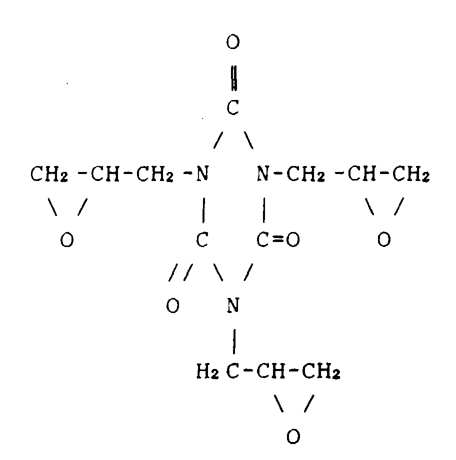 Epoxidzahl: ≥ 9,3 Aeq/kg

Zur Herstellung der Formmassen wurden die Komponenten in einem Doppelschneckenextruder mit Entgasungsvorrichtung (ZSK 28 der Firma Werner & Pfleiderer) eingebracht, bei 230°C homogenisiert, entgast und das genisierte Gemisch durch eine Düse als Strang ausgepreßt und granuliert.

### Zur Prüfung der UV-Stabilität wurden bestimmt:

Bei 200°C hergestellt Spritzgußprobekörper wurden in einem Atlas Weather Ometer nach den Vorschriften der Society Automotive Engeneers (SAE) nach J 1885 900 h bewittert. Danach wurde gemäß DIN 67 530 der Glanzwert in % ermittelt in Bezug auf den Ausgangswert der unbewitterten Proben.

### Zusammensetzung der Formmassen:

| | Tabelle 1 | Tabelle 2 |
|---|---|---|
| A) | 98,96 Gew.-% | 98,46 Gew.-% |
| B) | 0,5 Gew.-% | 0,5 Gew.-% |
| C) | 0,5 Gew.-% | 0,5 Gew.-% |
| D) | 0,04 Gew.-% | 0,04 Gew.-% |
| E) | | 0,5 Gew.-% |

Die Ergebnisse der Messungen sind den Tabellen zu entnehmen.

**Tabelle 1**

| Vergleichsbeisp. | Komp.B) | Komp.C) | Komp.D) | Glanzwert [%] |
|---|---|---|---|---|
| 1. | 1 | 1 | 1 | 19 |
| 2. | 1 | 2 | 1 | 20 |
| 3. | 2 | 2 | 1 | 18 |
| 4. | 2 | 1 | 1 | 18 |
| 5. | 3 | 3 | 1 | 17 |
| | | | | |
| 6. | 1 | 1 | 2 | 25 |
| 7. | 1 | 2 | 2 | 22 |
| 8. | 2 | 2 | 2 | 20 |
| 9. | 2 | 1 | 2 | 18 |
| 10. | 3 | 3 | 2 | 19 |
| | | | | |
| 11. | 1 | 1 | 3 | 20 |
| 12. | 1 | 2 | 3 | 19 |
| 13. | 2 | 2 | 3 | 17 |
| 14. | 2 | 1 | 3 | 19 |
| 15. | 3 | 3 | 3 | 21 |
| | | | | |
| 16. | 1 | 1 | - | 7 |
| 17. | 1 | 2 | - | 9 |
| 18. | 2 | 2 | - | 5 |
| 19. | 2 | 1 | - | 7 |
| 20. | 3 | 3 | - | 4 |
| | | | | |
| 21. | - | - | 1 | 0 |
| 22. | - | - | 2 | 0 |
| 23. | - | - | 3 | 0 |
| | | | | |
| 24. | - | 1 | 1 | 11 |
| 25. | 1 | - | 1 | 10 |

**Tabelle 2**

| | Komp.B) | Komp.C) | Komp.D) | Komp.E) | Glanzwert [%] |
|---|---|---|---|---|---|
| Erfindungsgemäße Beispiele | | | | | |
| 1. | 1 | 1 | 1 | + | 35 |
| 2. | 1 | 2 | 1 | + | 29 |
| 3. | 2 | 2 | 1 | + | 32 |
| 4. | 2 | 1 | 1 | + | 34 |
| 5. | 3 | 3 | 1 | + | 32 |
| | | | | | |
| 6. | 1 | 1 | 2 | + | 39 |
| 7. | 1 | 2 | 2 | + | 34 |
| 8. | 2 | 2 | 2 | + | 32 |
| 9. | 2 | 1 | 2 | + | 35 |
| 10. | 3 | 3 | 2 | + | 33 |
| | | | | | |
| 11. | 1 | 1 | 3 | + | 38 |
| 12. | 1 | 2 | 3 | + | 34 |
| 13. | 2 | 2 | 3 | + | 39 |
| 14. | 2 | 1 | 3 | + | 38 |
| 15. | 3 | 3 | 3 | + | 37 |

| Vergleichsbeispiele | | | | | |
|---|---|---|---|---|---|
| 26. | 1 | 1 | - | + | 11 |
| 27. | 1 | 2 | - | + | 10 |
| 28. | 2 | 2 | - | + | 8 |
| 29. | 2 | 1 | - | + | 12 |
| 30. | 3 | 3 | - | + | 13 |
| | | | | | |
| 31. | 1 | - | 1 | + | 13 |
| 32. | - | 1 | 1 | + | 15 |
| | | | | | |
| 33. | - | - | 1 | + | 0 |
| 34. | - | - | - | + | 0 |

Die erfindungsgemäßen Beispiele 1 bis 15 zeigen die wesentlich verbesserte UV-Stabilität der araldithaltigen Proben gegenüber den Vergleichsbeispielen 1 bis 5, 6 bis 10 und 11 bis 15, die kein Araldit, jedoch UV-Absorber B), HALS-Verbindung C) und Polyamid D) enthalten.

## Patentansprüche

1. Thermoplastische Formmassen, enthaltend
A) 40 bis 99,69 Gew.-% eines Polyoxymethylenhomo-oder -copolymerisates,
B) 0,1 bis 2 Gew.-% mindestens eines Stabilisators aus der Gruppe der Benzotriazolderivate oder Benzophenonderivate oder aromatischen Benzoatderivate,
C) 0,1 bis 2 Gew.-% mindestens einer sterisch gehinderten Aminverbindung,
D) 0,005 bis 2 Gew.-% eines Polyamids,
E) 0,1 bis 2 Gew.-% einer Epoxygruppen enthaltenden Verbindung
F) 0 bis 50 Gew.-% eines schlagzäh modifizierenden Polymeren,
G) 0 bis 50 Gew.-% eines faser- oder teilchenförmigen Füllstoffes oder deren Mischungen.

2. Thermoplastische Formmassen nach Anspruch 1,
in denen die Komponente C) ein Derivat des 2,2,6,6-Tetramethylpiperidins ist.

3. Thermoplastische Formmassen nach den Ansprüchen 1 oder 2, in denen die Komponente E) ein (Poly)kondensationsprodukt der Formel I aus 2,2-Di-(4-hydroxyphenyl)propan (Bisphenol A) und Epichlorhydrin ist: 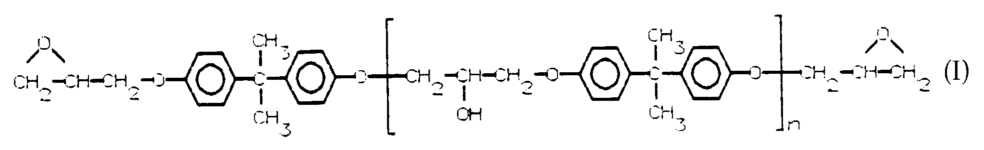 wobei n=0 bis 25 bedeutet.

4. Thermoplastische Formmassen nach den Ansprüchen 1 bis 3, in denen die Komponente E) Triglycidylisocyanurat ist.

5. Verwendung der thermoplastischen Formmassen gemäß den Ansprüchen 1 bis 4 zur Herstellung von Fasern, Folien und Formkörpern.

6. Formkörper, hergestellt aus den thermoplastischen Formmassen gemäß den Ansprüchen 1 bis 4.

## Claims

1. A thermoplastic molding material containing
A) from 40 to 99.69% by weight of a polyoxymethylene homo- or copolymer,
B) from 0.1 to 2% by weight of at least one stabilizer selected from the group consisting of the benzotriazole derivatives or benzophenone derivatives or aromatic benzoate derivatives,
C) from 0.1 to 2% by weight of at least one sterically hindered amino compound,
D) from 0.005 to 2% by weight of a polyamide,
E) from 0.1 to 2% by weight of an epoxy-containing compound,
F) from 0 to 50% by weight of a toughened polymer and
G) from 0 to 50% by weight of a fibrous or particulate filler or of a mixture thereof.

2. A thermoplastic molding material as claimed in claim 1, in which the component C) is a derivative of 2,2,6,6-tetramethylpiperidine.

3. A thermoplastic molding material as claimed in claim 1 or 2, in which the component E) is a (poly)condensate which is obtained from 2,2-di-(4-hydroxyphenyl)-propane (bisphenol A) and epichlorohydrin and is of the formula I 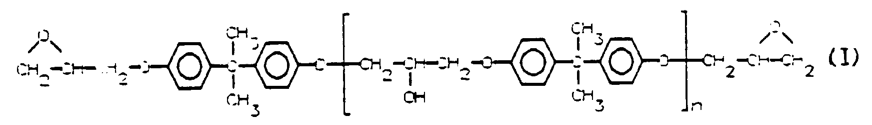 where n is from 0 to 25.

4. A thermoplastic molding material as claimed in any of claims 1 to 3, in which the component E) is triglycidyl isocyanurate.

5. The use of a thermoplastic molding material as claimed in any of claims 1 to 4 for the production of fibers, films and moldings.

6. A molding produced from a thermoplastic molding material as claimed in any of claims 1 to 4.

## Revendications

1. Masses à mouler thermoplastiques, contenant
A) 40 à 99,69 % en poids d'un homopolymère ou d'un copolymère de polyoxyméthylène,
B) 0,1 à 2 % en poids d'au moins un stabilisateur du groupe des dérivés de benzotriazole ou des dérivés de benzophénone ou des dérivés de benzoate aromatiques,
C) 0,1 à 2 % en poids d'au moins un composé amine encombré stériquement,
D) 0,005 à 2 % en poids d'un polyamide,
E) 0,1 à 2 % en poids d'un composé contenant des groupes époxydes,
F) 0 à 50 **%** en poids d'un polymère modifié à résistance élevée aux chocs,
G) 0 à 50% en poids d'une matière de charge fibreuse ou particulaire, ou de mélanges de celles-ci.

2. Masses à mouler thermoplastiques selon la revendication 1, dans lesquelles le composant C) est un dérivé de la 2,2,6,6-tétraméthylpipéridine.

3. Masses à mouler thermoplastiques selon les revendications 1 ou 2, dans lesquelles le composant E) est un produit de (poly)condensation répondant à la Formule I constitué de 2,2-di-(4-hydroxyphényl)propane (bisphénol A) et d'épichlorhydrine : 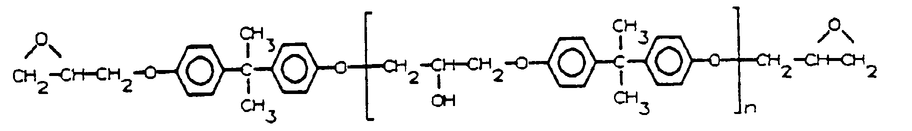 où n vaut 0 à 25.

4. Masses à mouler thermoplastiques selon les revendications 1 à 3, dans lesquelles le composant E) est l'isocyanurate triglycidylique.

5. Utilisation des masses à mouler thermoplastiques selon les revendications 1 à 4, pour la production de fibres, de films et d'objets moulés.

6. Objets moulés produits à partir de masses à mouler thermoplastiques selon les revendications 1 à 4.
